(19) Europäisches Patentamt
European Patent Office
Office européen des brevets

(11) EP 1 511 555 B1

(12) EUROPEAN PATENT SPECIFICATION

(45) Date of publication and mention
of the grant of the patent:
**30.12.2009 Bulletin 2009/53**

(51) Int Cl.:
**B01D 53/60** (2006.01)

(21) Application number: **03741795.3**

(22) Date of filing: **09.05.2003**

(86) International application number:
**PCT/US2003/014656**

(87) International publication number:
**WO 2003/103810 (18.12.2003 Gazette 2003/51)**

(54) **PROCESS FOR REDUCING THE LEVEL OF NOXx IN WASTE GAS STREAMS USING SODIUM CHLORITE**

VERFAHREN ZUM REINIGEN VON NOx IN ABGASEN UNTER VERWENDUNG VON NATRIUMCHLORIT

PROCEDE DE REDUCTION DE LA TENEUR EN NOx DANS DES COURANTS DE GAZ RESIDUAIRES AU MOYEN DE CHLORITE DE SODIUM

(84) Designated Contracting States:
**AT BE BG CH CY CZ DE DK EE ES FI FR GB GR HU IE IT LI LU MC NL PT RO SE SI SK TR**

(30) Priority: **05.06.2002 US 386560 P**
**05.06.2002 US 386492 P**
**24.01.2003 US 442268 P**

(43) Date of publication of application:
**09.03.2005 Bulletin 2005/10**

(73) Proprietor: **ExxonMobil Research and Engineering Company**
**Annandale NJ 08801-0900 (US)**

(72) Inventors:
• **TAKACS, Theresa, J.**
**Annandale, VA 22003 (US)**

• **BALMER, Robert, G.**
**Glen Gardner, NJ 08826 (US)**
• **CUNIC, John, D.**
**Denville, NJ 07834-9532 (US)**
• **SHAW, Henry**
**Scotch Plains, NJ 07076 (US)**
• **YANG, Chen-Lu**
**Millburn, NJ 07041 (US)**
• **GU, Pin**
**Belleville, NJ 07109 (US)**

(74) Representative: **Dew, Melvyn John et al**
**ExxonMobil Chemical Patents Inc.,**
**P.O. Box 105**
**1830 Machelen (BE)**

(56) References cited:
**EP-A- 0 199 037      DE-A- 3 230 352**
**DE-A- 3 908 052      DE-C- 3 816 532**

**Description**

**FIELD OF THE INVENTION**

The present invention relates to a process for reducing $NO_x$ concentrations in waste gas streams. More particularly, the present invention relates to contacting a $NO_x$-containing waste gas stream with an effective amount of sodium chlorite under conditions such that at least a fraction of the oxidizable $NO_x$ species present in the waste gas stream is oxidized to higher nitrogen oxides.

**BACKGROUND OF THE INVENTION**

Increasingly stringent government regulatory emission standards have led refiners to explore improved technologies for reducing the concentration of nitrogen oxides ("$NO_x$") in emissions from combustion and production effluent or waste gas streams. For example, the technology taught in United States Patent Number 3,957,949 to Senjo, et al., teaches a method for removing low-soluble pollutants, such as mercury and NO, from waste gas streams by use of an oxidizing agent that is released from a compound, such as sodium chlorite, that is injected into a recycle stream. Also, United States Patent Number 6,294,139 to Vicard et al. discloses a method for removing nitrogen oxides from waste gas streams by oxidizing nitrogen oxide with chlorine dioxide or ozone, then bringing the oxidized gas in contact with sodium chlorite in a water solution. Further, it is known in the art to reduce $NO_x$ concentrations in combustion effluent streams by the injection of ammonia, see United States Patent Number 3,900,554 to Lyon, . After the Lyon patent, there was a proliferation of patents and publications relating to the injection of ammonia into combustion streams in order to reduce $NO_x$ concentration. Such patents include United States Patent Numbers 4,507,269 and 4,115,515.

Even so, effluents released from combustion units and production streams, such as the regenerator off-gas of a fluidized catalytic cracking ("FCC") unit, remain a source of $NO_x$ emissions from refineries. Many fluidized catalytic cracking process units incorporate wet gas scrubbers to remove attrited catalyst fines, with the ancillary benefit of these wet gas scrubbers reducing $NO_2$. While scrubbing is effective for reducing $NO_2$ emissions, it is not as effective for reducing NO emissions. Since a majority (typically 90%) of the $NO_x$ contained on FCC unit's waste gas streams is NO, there is a need for a method for reducing NO emissions from an FCC unit's waste gas (or "offgas") in order to obtain further reductions in total $NO_x$ emissions.

One approach to reducing NO emissions involves oxidizing lower oxide $NO_x$ species to higher nitrogen oxides. However, the conventional methods involve either chemicals that require extended reaction periods or they create problems within the processing unit. Such problems include, for example, corrosion of materials of construction, problems with treating the waste water from the unit, as well as problems relating to the removal of $SO_x$ species that are typically also present. For example, it is known in the art to add sodium chlorite ($NaClO_2$) to the wet gas scrubber liquor to oxidize $NO_x$ species to higher oxides such as, for example, to $NO_2$ and $N_2O_5$ which are water soluble and which can be removed from the process system, typically as nitrate and nitrite, respectively.

However, the addition of sodium chlorite to the scrubber liquor has disadvantages. For example, sodium chlorite is a costly chemical and can be consumed by side reactions, such as the oxidation of $SO_x$ species to higher sulfur oxides (e.g., $SO_2$ to $SO_3$). Thus, because sodium chlorite does not selectively oxidize lower oxide $NO_x$ species to higher nitrogen oxides, conventional methods require the use of relatively high sodium chlorite concentrations in the scrubber liquor to achieve the desired reduction of oxidizable $NO_x$ species. These high levels of sodium chlorite lead to high chloride levels that cause, among other things, corrosion of the scrubber's materials of construction.

Thus, there still is a need in the art for an economical and effective method to reduce the level of $NO_x$ species from waste gas streams.

**SUMMARY OF THE INVENTION**

In accordance with the present invention, there is provided a process for reducing $NO_x$ concentrations in the waste gas stream from a fluidized catalytic cracking process unit, which stream contains both $NO_x$ and $SO_x$ species, which process comprises:

a) removing at least a fraction of the $SO_x$ species from said waste gas stream thereby producing an $SO_x$ depleted waste gas stream;

b) contacting said $SO_x$ depleted waste gas stream with an effective amount of sodium chlorite at effective oxidation conditions that will oxidize at least a fraction of oxidizable $NO_x$ species to higher nitrogen oxides; and

c) removing at least a fraction of said higher nitrogen oxides from the treated waste gas stream.

In a preferred embodiment spray nozzles integral to a wet gas scrubber separator drum are used to contact the sodium chlorite with the waste gas stream.

In another preferred embodiment, the resulting higher nitrogen oxides of the $NO_x$ species are removed from the waste gas stream by a method selected from the group consisting of alkaline solution absorption, reducing solution absorption, scrubbing, ammonia injection, catalytic conversion, and absorption with water.

In still another preferred embodiment at least a fraction of the $NO_x$ species initially present in the waste gas stream is removed before step a) above.

## DETAILED DESCRIPTION OF THE PRESENT INVENTION

As used herein, the terms $NO_x$, $NO_x$ species, and nitrogen oxides refers to the various oxides of nitrogen that may be present in combustion waste gasses. Thus, the terms refer to all of the various oxides of nitrogen including, but not limited to, nitric oxide (NO), nitrogen dioxide ($NO_2$), nitrogen peroxide ($N_2O_4$) nitrogen pentoxide ($N_2O_5$), and mixtures thereof. Also, the term "lower nitrogen oxide" refers to nitrogen oxides that are oxidizable to higher oxides. Nitric oxide (NO) is the most preferred nitrogen oxide to be oxidized since up to 90 wt.% of the nitrogen oxides in a typical FCC unit's waste gas stream treated by the present invention is NO.

Therefore, in one embodiment, the process is especially concerned with the reduction and control of NO.

**[0012]** The terms flue gas, wet gas, combustion effluent stream, combustion waste gas effluent stream, waste gas, offgas, and waste gas stream are used interchangeably herein. Also, the terms wet gas scrubber, scrubbing apparatus, and scrubber are also sometimes used interchangeably herein.

The present invention provides a cost effective manner for removing $NO_x$ species from waste gas streams produced by combustion units, namely, the waste gas generated by a fluidized catalytic cracking process unit. The instant process involves adding an effective amount of sodium chlorite to the waste gas stream under conditions effective for oxidizing at least a fraction of the lower nitrogen oxides, particularly NO, contained in the waste gas stream to higher oxides (e.g. $NO_2$ and higher). As used herein, an effective amount of sodium chlorite is an amount that oxidizes at least a fraction of the oxidizable $NO_x$ species present in the waste gas stream. By at least "a fraction" we mean at least 20 vol.%, for example 20 vol.% to 80 vol.%, preferably 40 vol.% to 90 vol.%, more preferably 50 vol.% to 99 vol.%, and most preferably substantially all of the lower oxide $NO_x$ species present in the waste gas stream are oxidized to higher nitrogen oxides.

Thus, by using sodium chlorite to oxidize the lower $NO_x$ species to higher oxides of nitrogen, the level of $NO_x$ emissions from flue gas streams can be reduced as the higher nitrogen oxides such as, for example, $NO_2$ and $N_2O_5$, are more easily removed than are lower nitrogen oxides.

As discussed, the addition of sodium chlorite to the scrubber liquor is described in U.S. Patent Number 6,294,139. Adding sodium chlorite to the scrubber liquor is disadvantageous because sodium chlorite also oxidizes $SO_x$ species to higher sulfur oxides. This non-preferential oxidation reaction may lead to injecting relatively high levels of sodium chlorite into the waste gas stream in order to remove a satisfactory amount of $NO_x$ species present in the waste gas stream. As discussed, these high levels of sodium chlorite have the undesirable effects of causing corrosion of the scrubber hardware, causing problems associated with waste water treatment, as well as increasing the costs of reagents. Moreover, using chlorine dioxide to oxidize the $NO_x$ species to higher nitrogen oxides in combination with sodium chlorite absorption to remove the higher nitrogen oxides has the additional disadvantage of higher costs.

The instant invention solves at least some of these problems by contacting the waste gas stream directly with sodium chlorite downstream from an $SO_x$ removal step. The $SO_x$ removal method employed is not essential to the present invention and may be any effective method. In one embodiment, the $SO_x$ removal method preferably reduces the levels of $SO_x$ species in the waste gas stream to below 100 ppm, preferably below 50 ppm, and more preferably below 10 ppm before the sodium chlorite is mixed with the waste gas stream. It is most preferred to remove substantially all of the $SO_x$ species present in the waste gas stream before the sodium chlorite is mixed with the waste gas stream. Non-limiting examples of $SO_x$ removal processes suitable for use herein include wet desulfurization methods such as water scrubbing, alkali scrubbing, magnesia scrubbing, and ammonium scrubbing, as well as dry desulfurization methods such as using manganese oxide or activated carbon. Preferably, the $SO_x$ species are removed by a wet desulfurization method, most preferably by use of a wet gas scrubber.

Wet gas scrubbers remove, for example, attrited catalyst fines and $SO_x$ species. Thus, by contacting the waste gas stream with the sodium chlorite after the scrubbers, there is a lower level of $SO_x$ species present in the waste gas stream at the point of mixing with sodium chlorite. Consequently, lesser quantities of sodium chlorite can be used to achieve the desired reduction of $NO_x$ species. Further, this lower use rate of sodium chlorite also mitigates the above mentioned problems, such as corrosion of hardware and waste water treatment.

While the mechanism by which sodium chlorite oxidizes oxidizable $NO_x$ species to higher nitrogen oxides is complex, it is believed that sodium chlorite can react directly with the $NO_x$ species, or under acidic conditions, preferably below a pH of 6 herein, form chlorine dioxide. While not wishing to be bound by any theory or model, it is believed that under such acidic conditions, the sodium chlorite compound disproportionates into sodium ions and chlorine dioxide. The gaseous chlorine dioxide thus formed oxidizes lower $NO_x$ species to higher oxides. While not wishing to be bound, it is believed that the general oxidation reaction where chlorine dioxide oxidizes $NO_x$ species to higher oxides can be represented by the following equation:

$$\text{Equation 1:} \quad 5NO + 3ClO_2 + 4H_2O \rightarrow 5HNO_3 + 3HCl.$$

When using sodium chlorite in an acidic environment, preferably below a pH of 6, the amount of chlorine dioxide needed to oxidize lower $NO_x$ species to higher oxides must be considered to ensure the presence of sufficient quantities of sodium chlorite. Accordingly, when the sodium chlorite disproportionates, there should be a sufficient concentration of chlorine dioxide present to oxidize the lower $NO_x$'s to higher oxides. In one embodiment, the amount of chlorine dioxide used ranges from 3 to 8 moles of $ClO_2$ to 5 moles of NO. Alternatively, the amount ranges from 4 to 7 moles of $ClO_2$ to 5 moles of NO. Preferably a slightly greater than stoichiometric amount of sodium chlorite, for example, 3 to 4 moles of $ClO_2$ to 5 moles of NO.

**[0020]** As discussed, sodium chlorite can also oxidize $NO_x$ species directly. This oxidation can occur in a slightly acidic environment, e.g., a pH of 6 to 7, a neutral environment, pH of 7, or a basic environment, pH above 7. However, as the pH increases to 10, the absorption of $NO_x$ species decreases. While not wishing to be bound, it is believed that the mechanism by which sodium chlorite reacts directly with $NO_x$ species can be represented by Equation 2 below.

$$\text{Equation 2:} \quad 4NO + 3NaClO_2 + 2H_2O \rightarrow 4HNO_3 + 3NaCl.$$

When sodium chlorite oxidizes $NO_x$ species directly, the amount of sodium chlorite used will typically range from 3 to 10 times the stoichiometric amount of sodium chlorite to lower oxide $NO_x$ species, preferably from 2 to 8 times the stoichiometric amount, and most preferably slightly greater than the stoichiometric amount of sodium chlorite, for example, 1.1 to 2.5 times the stoichiometric amount, needed to oxidize at least a fraction of the lower nitrogen oxides to higher oxides.

After at least a fraction of the oxidizable $NO_x$ species are oxidized to higher nitrogen oxides, at least a fraction of these higher nitrogen oxides can be removed. The removal of these higher nitrogen oxides may be accomplished by any effective process. Such processes include, but are not limited to, the use of an alkaline solution such as an aqueous caustic soda solution or a reducing solution such as an aqueous sodium thiosulfate solution, sodium chlorite absorption, catalytic conversion, and ammonia and hydrogen injection, as described in United States Patent Number 3,900,554. Most preferably the oxidized $NO_x$ compounds are removed by scrubbing with water because the higher oxides such as, for example, $NO_2$ and $N_2O_5$ are more water soluble than are the lower nitrogen oxides. In the practice of the presently claimed invention, 20 vol.% to 100 vol.% of the higher oxides are removed after oxidation, preferably 40 vol.% to 80 vol.% of the higher oxides are removed after oxidation, more preferably 60 vol.% to 90 vol.% of the higher oxides of the $NO_x$ species are removed after oxidation.

As discussed, it is preferred that at least a fraction of the $SO_x$ species of the waste gas stream be removed, preferably by wet gas scrubbing. Thus, in one embodiment, sodium chlorite is mixed with the waste gas stream in an existing separator drum typically associated with the wet gas scrubber. A conventional separator drum may contain hardware such as spray nozzles located within the separator drum. In one embodiment, a contaminated waste gas stream is conducted to a separator drum and the sodium chlorite is sprayed through the spray nozzles so that the stream contacts the sodium chlorite. The sodium chlorite can be first mixed with water, preferably deionized water, which acts as a carrier fluid to better disperse the sodium chlorite. Additional amounts of deionized water may be sprayed through the spray nozzles. By additional amount of deionized water, it is meant that amount of deionized water sufficient to absorb at least a fraction of the higher nitrogen oxides.

In another embodiment, a greater amount of sodium chlorite than necessary to oxidize a given fraction of the $NO_x$ species present in the waste gas stream is mixed with the waste gas stream after the $SO_x$ removal step. This additional amount of sodium chlorite oxidizes at least a fraction of any $SO_x$ species remaining in the waste gas stream to higher sulfur oxides after the $SO_x$ removal step. These higher oxides of $SO_x$ species can then be removed by any effective method.

In another embodiment, the waste gas stream is passed through an initial $NO_x$ removal step to remove at least a fraction of the $NO_x$ initially present in the waste gas stream in order to reduce the amount of sodium chlorite needed to oxidize the remaining oxidizable $NO_x$ species in the waste gas stream. In this first $NO_x$ removal step, at least 10 vol.%, preferably from 10 vol.% to 30 vol.%, more preferably from 20 vol.% to 60 vol.%, and most preferably 30 vol.% to 90

vol.%, of the $NO_x$ initially present in the waste gas stream are removed before the waste gas stream is mixed with the sodium chlorite. The manner in which an initial amount of $NO_x$ species is removed before the waste gas stream is mixed with sodium chlorite is not critical and may be any effective method.

The above description is directed to one preferred means for carrying out the present invention. Those skilled in the art will recognize that other means that are equally effective could be devised for carrying out the invention.

## EXAMPLES

The following examples will illustrate the effectiveness of the present process, but is not meant to limit the present invention in any manner.

## EXAMPLE 1

The addition of sodium chlorite to a waste gas stream was tested in a bench scale environment. The concentration of $SO_x$ species and $NO_x$ species present in the waste gas stream, a simulated scrubber liquor, were measured before the experiment began, and this data is shown in Table 1 below. The initial temperature of the stream was measured using a thermocouple device and was observed to be 20°C (68°F). The initial oxygen concentration of the waste gas stream was also measured and was determined to be 3.0 vol.% $O_2$.

The waste gas was allowed to flow through a 5 cm bench scale venturi scrubber, and sodium chlorite was added to the waste gas stream downstream from the scrubber. The pH and sodium chlorite concentration of the system, along with the outlet concentration of $SO_x$ species and $NO_x$ species, were also monitored. The experiment removed greater than 95% of the $SO_x$ species and greater than 90% $NO_x$ species initially present in the waste gas stream. All parameters, along with the results of this experiment, are reported in Table 1 below.

**TABLE 1**

| | |
|---|---|
| NOx inlet | 50-60 ppmv |
| SOx inlet | 50-500 ppmv |
| Waste Gas Temperature | 20°C (68°F) |
| $O_2$ vol.% | 3 |
| Scrubber Liquor | simulated |
| $NaClO_2$ concentration | 0.01-0.1M |
| System pH | 4.05-9.10 |
| NOx outlet (% removal) | > 90% |
| SOx outlet (% removal) | > 95% |

## EXAMPLE 2

An embodiment was also tested on a full-scale operational fluidized catalytic cracking process unit. This experiment was performed without any modifications to the existing separator drum associated with the wet gas scrubber of the fluidized catalytic cracking process unit.

In this experiment, the spray nozzles of the wet gas scrubber separator drum of the fluidized catalytic process unit were used to mix the sodium chlorite with the waste gas stream. The sodium chlorite was first mixed with deionized water and sprayed into the separator drum using the spray nozzles. An additional amount of deionized water was also used in this experiment to remove a fraction of the resulting higher nitrogen oxides by water absorption.

This experiment implemented one embodiment of the present invention on the fluidized catalytic cracking process unit for a period of three days during which NO oxidation, overall $NO_x$ removal, sodium chlorite flow rate, and deionized water flow rate were monitored and recorded. The NO oxidation and $NO_x$ removal is reported as a percentage which is defined for uses herein as the [(inlet concentration - the outlet concentration)/inlet concentration]* 100. This data is reported below in Table 2 below.

**TABLE 2**

| Day | Water Flow (gpm) | NaClO$_2$ flow (gpm) | NO oxidation % | NOx removal % |
|-----|------|------|------|------|
| | 80-90 | 0 | 0 | 0 |
| | 90 | 1 | 42 | 15 |
| | 200 | 2.3 | 94 | 49 |
| | 300 | 2.3 | 99 | 57 |
| 1 | 0 | 0 | 0 | 0 |
| 2 | 465 | 2 | 99 | 55 |
| | 465 | 2 | 99 | 46 |
| | 465 | 1.8 | 99 | 44 |
| | 465 | 1.5 | 99 | 42 |
| | 465 | 1.25 | 99 | 40 |
| | 465 | 1.1 | 99 | 39 |
| | 465 | 0.7 | 93 | 39 |
| | 465 | 0 | 0 | 0 |
| 3 | 170 | 1 | 51 | 9 |
| | 170 | 1.8 | 63 | 13 |
| | 170 | 2 | 67 | 13 |
| | 170 | 2.3 | 76 | 15 |
| | 350 | 2.3 | 98 | 32 |
| | 465 | 2.2 | 97 | 45 |
| | 350 | 1.8 | 99 | 44 |
| | 350 | 1 | 97 | 38 |

The maximum water flow rate associated with the spray nozzles of the separator drum utilized in this experiment was 465 gpm. Thus, it is believed, based on the collected data, that by utilizing spray nozzles with a higher flow rate capacity, or modifying the spray nozzles used herein in a manner such that their flow rate capacity is increased, the NO$_x$ removal rate would increase.

Also, it is believed, that by increasing the gas/liquid contact area, the NO$_x$ removal rate will also increase. Packing material used in this experiment and it was limited to 1.52m (5 ft) of the separator drum. It would be advantageous to increase the gas/liquid contact area by, for example, increasing the volume of packing material or by utilizing a packing material that would provide for an increased gas/liquid contact area.

**Claims**

1.  A process for reducing NO$_x$ concentrations in the waste gas stream from a fluidized catalytic cracking process unit, which stream contains both NO$_x$ and SO$_x$ species, which process comprises:

    a) removing at least a fraction of the SO$_x$ species from said waste gas stream thereby producing a SO$_x$ depleted waste gas stream;
    b) contacting said SO$_x$ depleted waste gas stream with an effective amount of sodium chlorite at conditions that will oxidize at least a fraction of oxidizable NO$_x$ species to higher nitrogen oxides; and
    c) removing at least a fraction of said higher nitrogen oxides.

2.  The process according to claim 1 wherein step a) above is carried out by a wet desulfurization process such as water scrubbing, alkali scrubbing, magnesia scrubbing, ammonium scrubbing.

3. The process according to claim 1 wherein step a) above is carried out by a dry desulfurization process using an agent selected from manganese oxide and activated carbon.

4. The process according to claim 2 wherein said $SO_x$ species are removed by wet gas scrubbing.

5. The process according to claim 4 wherein said sodium chlorite is contacted with said waste gas stream at a point downstream from the wet gas scrubber of a combustion unit.

6. The process according to claim 4 wherein said sodium chlorite is contacted with said waste gas stream in a separation drum associated with a wet gas scrubbing unit.

7. The process according to claim 4 wherein said sodium chlorite is contacted with said waste gas stream in a separation drum of a wet gas scrubbing unit through at least one spray nozzle.

8. The process according to claim 1 wherein said sodium chlorite is mixed with water before contacting said waste gas stream.

9. The process according to claim 1 wherein at least a fraction of said higher nitrogen oxides is removed by a method selected from alkaline solution absorption, reducing solution absorption, scrubbing, ammonia injection, absorption with water, and catalytic conversion.

10. The process according to claim 9 wherein at least a fraction of the higher nitrogen oxides is removed by ammonia injection wherein the ammonia is injected in admixture with hydrogen.

11. The process according to claim 8 wherein an amount of deionized water sufficient to absorb at least a fraction of said higher oxides is injected with said sodium chlorite.

12. The process according to claim 2 wherein at least a fraction of $NO_x$ species initially present in said waste gas stream are removed before said step a) of claim 1 above.


**Patentansprüche**

1. Verfahren zur Verringerung der $NO_x$-Konzentrationen im Abgasstrom aus einer katalytischen Wirbelschicht-Crackverfahrensanlage, bei dem der Strom sowohl $NO_x$- als auch $SO_x$-Spezies enthält und bei dem

a) mindestens ein Teil der $SO_x$-Spezies aus dem Abgasstrom entfernt und **dadurch** ein an $SO_x$ abgereicherter Abgasstrom erzeugt wird,
b) der an $SO_x$ abgereicherte Abgasstrom mit einer wirksamen Menge Natriumchlorit unter Bedingungen kontaktiert wird, bei denen mindestens ein Teil der oxidierbaren $NO_x$-Spezies zu höheren Stickstoffoxiden oxidiert wird, und
c) mindestens ein Teil der höheren Stickstoffoxide entfernt wird.

2. Verfahren nach Anspruch 1, bei dem Stufe a) mittels eines Nassentschwefelungsverfahrens wie Wasserwäsche, Alkaliwäsche, Magnesiumoxidwäsche und Ammoniumwäsche durchgeführt wird.

3. Verfahren nach Anspruch 1, bei dem Stufe a) mittels eines Trockenentschwefelungsverfahrens unter Verwendung eines Mittels ausgewählt aus Manganoxyd und Aktivkohle durchgeführt wird.

4. Verfahren nach Anspruch 2, bei dem die $SO_x$-Spezies durch Nassgaswäsche entfernt werden.

5. Verfahren nach Anspruch 4, bei dem das Natriumchlorit mit dem Abgasstrom an einer Stelle stromabwärts von dem Nassgaswäscher einer Verbrennungseinheit kontaktiert wird.

6. Verfahren nach Anspruch 4, bei dem das Natriumchlorit mit dem Abgasstrom in einer Trenntrommel assoziiert mit einer Nassgaswaschanlage kontaktiert wird.

**7.** Verfahren nach Anspruch 4, bei dem das Natriumchlorit mit dem Abgasstrom in einer Trenntrommel einer Nassgaswäscheanlage durch mindestens eine Sprühdüse kontaktiert wird.

**8.** Verfahren nach Anspruch 1, bei dem das Natriumchlorit vor dem Kontakt mit dem Abgasstrom mit Wasser gemischt wird.

**9.** Verfahren nach Anspruch 1, bei dem mindestens ein Teil der höheren Stickstoffoxide mittels eines Verfahrens ausgewählt aus Absorption mit alkalischer Lösung, Absorption mit reduzierender Lösung, Wäsche, Ammoniakinjektion, Absorption mit Wasser und katalytischer Umwandlung entfernt wird.

**10.** Verfahren nach Anspruch 9, bei dem mindestens ein Teil der höheren Stickstoffoxide durch Ammoniakinjektion entfernt wird, wobei das Ammoniak im Gemisch mit Wasserstoff injiziert wird.

**11.** Verfahren nach Anspruch 8, bei dem eine ausreichende Menge entionisiertes Wasser, um mindestens einen Teil der höheren Oxide zu absorbieren, mit dem Natriumchlorit injiziert wird.

**12.** Verfahren nach Anspruch 2, bei dem mindestens ein Teil der $NO_x$-Spezies, die anfänglich in dem Abgasstrom vorhanden sind, vor Stufe a) von Anspruch 1 entfernt wird.

**Revendications**

**1.** Procédé permettant de réduire les concentrations en $NO_x$ dans le courant de gaz résiduaires d'une unité de procédé de craquage catalytique en lit fluidisé, lequel courant contient les deux espèces $NO_x$ et $SO_x$, lequel procédé comprend les étapes consistant à :

a) éliminer au moins une fraction de l'espèce $SO_x$ dudit courant de gaz résiduaires afin de produire un courant de gaz résiduaires appauvri en $SO_x$ ;
b) mettre en contact ledit courant de gaz résiduaires appauvri en $SO_x$ avec une quantité efficace de chlorite de sodium dans des conditions qui oxyderont au moins une fraction de l'espèce $NO_x$ oxydable en oxydes d'azote supérieurs ; et
c) éliminer au moins une fraction desdits oxydes d'azote supérieurs.

**2.** Procédé selon la revendication 1 dans lequel l'étape a) ci-dessus est réalisée par un procédé de désulfuration humide tel que lavage à l'eau, lavage alcalin, lavage à la magnésie, lavage ammoniacal.

**3.** Procédé selon la revendication 1 dans lequel l'étape a) ci-dessus est réalisée par un procédé de désulfuration sec au moyen d'un agent choisi parmi l'oxyde de manganèse et le charbon actif.

**4.** Procédé selon la revendication 2 dans lequel lesdites espèces $SO_x$ sont éliminées par lavage des gaz par voie humide.

**5.** Procédé selon la revendication 4 dans lequel ledit chlorite de sodium est mis en contact avec ledit courant de gaz résiduaires en un point situé en aval du laveur de gaz par voie humide d'une unité de combustion.

**6.** Procédé selon la revendication 4 dans lequel ledit chlorite de sodium est mis en contact avec ledit courant de gaz résiduaires dans un ballon de séparation associé à une unité de lavage des gaz par voie humide.

**7.** Procédé selon la revendication 4 dans lequel ledit chlorite de sodium est mis en contact avec ledit courant de gaz résiduaires dans un ballon de séparation d'une unité de lavage des gaz par voie humide via au moins une buse d'atomisation.

**8.** Procédé selon la revendication 1 dans lequel ledit chlorite de sodium est mélangé avec de l'eau avant d'être mis en contact ledit courant de gaz résiduaires.

**9.** Procédé selon la revendication 1 dans lequel au moins une fraction desdits oxydes d'azote supérieurs est éliminée par un procédé choisi parmi l'absorption par une solution alcaline, l'absorption par une solution réductrice, le lavage, l'injection d'ammoniac, l'absorption avec de l'eau et la conversion catalytique.

**10.** Procédé selon la revendication 9 dans lequel au moins une fraction des oxydes d'azote supérieurs est éliminée par injection d'ammoniac dans laquelle de l'ammoniac est injecté en mélange avec de l'hydrogène.

**11.** Procédé selon la revendication 8 dans lequel une quantité d'eau désionisée suffisante pour absorber au moins une fraction desdits oxydes supérieurs est injectée avec ledit chlorite de sodium.

**12.** Procédé selon la revendication 2 dans lequel au moins une fraction des espèces $NO_x$ présentes initialement dans ledit courant de gaz résiduaires est éliminée avant ladite étape a) de la revendication 1 ci-dessus.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3957949 A, Senjo
- US 6294139 B, Vicard
- US 3900554 A, Lyon
- US 4507269 A
- US 4115515 A